# EUROPÄISCHE PATENTSCHRIFT

(11) **EP 1 894 772 B1**
(45) Veröffentlichungstag und Bekanntmachung des Hinweises auf die Patenterteilung: **13.07.2011**
(21) Anmeldenummer: 07015982.7
(22) Anmeldetag: 14.08.2007
(51) Int. Cl.: B60P 1/64, B62D 21/14

(54) **Verfahren und Vorrichtung zum fahrfertigen Beladen eines Aufliegers für austauschbare Ladeträger**
Method and device for loading a trailer of the kind for transporting removable containers
Procédé et dispositif de chargement d'une remorque du type destiné au transport de conteneurs amovibles

(30) Priorität: 29.08.2006 DE 102006040314
(43) Veröffentlichungstag der Anmeldung: 05.03.2008
(73) Patentinhaber: Fliegl Fahrzeugbau GmbH, 07819 Triptis (DE)
(72) Erfinder: Fliegl, Helmut, 07819 Triptis (DE)
(74) Vertreter: Tetzner, Michael

(56) Entgegenhaltungen:
- EP-A- 1 486 375
- FR-A- 2 004 550
- US-A- 4 580 805

## Beschreibung

Die Erfindung bezieht sich auf ein Verfahren und eine Vorrichtung zum fahrfertigen Beladen eines Aufliegers für austauschbare Ladeträger (Container), bei welchem mindestens ein Ladeträger auf einem längenveränderbaren Hauptrahmen angeordnet wird, wobei der Hauptrahmen mit mindestens einer Fahrachse versehen ist.

Allgemeiner Stand der Technik ist ein Containerchassis, d.h. Auflieger für austauschbare Ladeträger, auf welchem ein Container angeordnet ist. Infolge des Beladevorgangs befindet sich dieser Container in der Heckposition des Containerchassis, woraus eine ungünstige Lastverteilung auf die mindestens eine Fahrachse resultiert. Damit ist es in der Praxis oftmals nicht möglich, dass der geforderte Satteldruck von mindestens 25% auf der Sattelplatte erreicht wird.

Die US 4,580,805 A offenbart einen Auflieger, bei dem ein Ladeträger über einen auf einem Längenveränderbaren Hauptrahmen gelagerten Hilfsrahmen von der Heckposition in eine Position Richtung Mitte verschoben wird.

Der vorliegenden Erfindung liegt die Aufgabe zugrunde, ein Verfahren bzw. eine Vorrichtung zu schaffen, wonach bei einem Auflieger mit austauschbarem Ladeträger während der Fahrt der geforderte Satteldruck von mindestens 25% auf der Sattelplatte erreicht wird.

Diese Aufgabe wird erfindungsgemäß dadurch gelöst, dass nach dem Beladen des Aufliegers der Ladeträger angehoben wird, und von der Heckposition auf dem Hauptrahmen in eine fahrfertige Position Richtung Mitte in Bezug auf den Hauptrahmen verschoben wird. Hierdurch ergibt sich infolge der Lastverlagerung durch Verschieben von der Heckposition in die Position Richtung Mitte, dass der geforderte Satteldruck von mindestens 25% auf der Sattelplatte erreicht wird. Damit ergibt sich eine wesentliche Verbesserung des Fahrverhaltens. Zum Beladen kann umgekehrt der Ladeträger von der Fahrstellung in die Heckposition verschoben werden, so dass danach das problemlose heckbündige Entladen wieder möglich ist.

In weiterer Ausgestaltung der Erfindung wird der Ladeträger über einen auf dem längenveränderbaren Hauptrahmen gelagerten Hilfsrahmen von der Heckposition in Richtung Mitte verschoben.

Weiterhin kann das Verfahren durch folgende weiteren Verfahrensschritte gekennzeichnet sein:
a) Absenken des längenveränderbaren Hauptrahmens mit Hilfe mindestens einer als Hubeinrichtung ausgebildeten Luftfeder, wobei der im vorderen Bereich des Hauptrahmens drehbar gelagerte Hilfsrahmen den entriegelten Ladeträger im hinteren Bereich anhebt,
b) Vorschieben oder -ziehen des Ladeträgers auf dem längenveränderbaren Hauptrahmen mit Hilfe des Hilfsrahmens von der Heckposition in Richtung Mitte und
c) Anheben des Hauptrahmens über die mindestens eine Hubeinrichtung mit gleichzeitigem Absenken des Hilfsrahmens in Höhe des Hauptrahmens und Verriegeln des Ladeträgers auf dem längenveränderbaren Hauptrahmen in der fahrfertigen Position Richtung Mitte.

In weiterer Ausgestaltung der Erfindung kann das Vorschieben oder -ziehen des Ladeträgers von der Heckposition in Richtung Mitte über einen auf dem Hilfsrahmen verschiebbar angeordneten Roll- oder Gleitschlitten durchgeführt werden.

Das Längenverändern des Hauptrahmens kann durch dessen Teleskopieren oder Verschieben erfolgen.

Die Vorrichtung zur Durchführung des vorgenannten Verfahrens ist so ausgebildet, dass auf dem Hauptrahmen ein um eine Gelenkachse im vorderen Bereich des Hauptrahmens drehbar gelagerter Hilfsrahmen mit einem Roll- oder Gleitschlitten angeordnet ist.

In weiterer Ausgestaltung der Erfindung ist über mindestens eine im hinteren bereich des Hauptrahmens angeordnete als Luftfeder ausgebildete Hubeinrichtung der Hilfsrahmen gegenüber dem Hauptrahmen um die Gelenkachse schwenkbar. Hierbei kann der Roll- oder Gleitschlitten in mindestens einer Führung des Hilfsrahmens über Rollenpaare bewegbar sein.

Die Erfindung wird nachfolgend anhand eines in der Zeichnung dargestellten Ausführungsbeispiels näher beschrieben. In der Zeichnung zeigen:
- Fig. 1-4: die Verfahrensschritte zum fahrfertigen Beladen eines Sattelaufliegers für austauschbare Ladeträger in schematischer Seitenansicht; und
- Fig. 5: eine schematische Seitenansicht eines Roll- oder Gleitschlittens auf einem Hilfsrahmen.

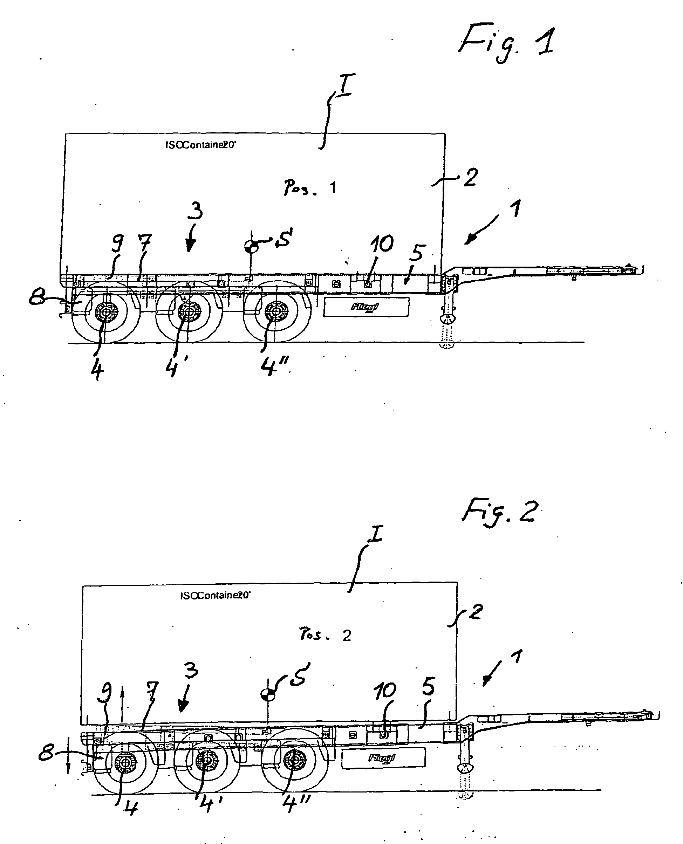

Gemäß den Figuren 1 bis 4 dient das Verfahren der vorliegenden Erfindung zum fahrfertigen Beladen eines Aufliegers 1 für austauschbare Ladeträger 2 (Container), wobei der Container aus einer Heckposition (I) nach Fig. 1 in eine fahrfertige Position Richtung Mitte (II) auf einem längenveränderbaren oder verschiebbaren Hauptträger 5 verschoben wird. Hierdurch verschiebt sich der Schwerpunkt S des Ladeträgers 2 von der Position gemäß I in die Position gemäß IV, d.h. es erfolgt eine Lastverlagerung, wodurch der geforderte Satteldruck von mindestens 25% auf der Sattelplatte erreicht wird.

Die erfindungsgemäße Vorrichtung besteht unter anderem aus einem Fahrgestell 3 und einem längenveränderbaren oder verschiebbaren Hauptrahmen 5, wobei dieser Hauptrahmen mit mindestens einer Fahrachse 4, 4', 4" versehen ist. Auf dem Hauptrahmen 5 ist ein um eine Gelenkachse 10 im mittleren Bereich drehbar gelagerter Hilfsrahmen 7 mit einem Roll- oder Gleitschlitten 9 angeordnet. Über mindestens eine im hinteren Bereich des Hauptrahmens angeordnete Luftfeder 8 ist der Hilfsrahmen 7 gegenüber dem Hauptrahmen 5 um die Gelenkachse 10 schwenkbar. Statt der Luftfeder 8 kann auch eine andere Hubeinrichtung eingesetzt werden.

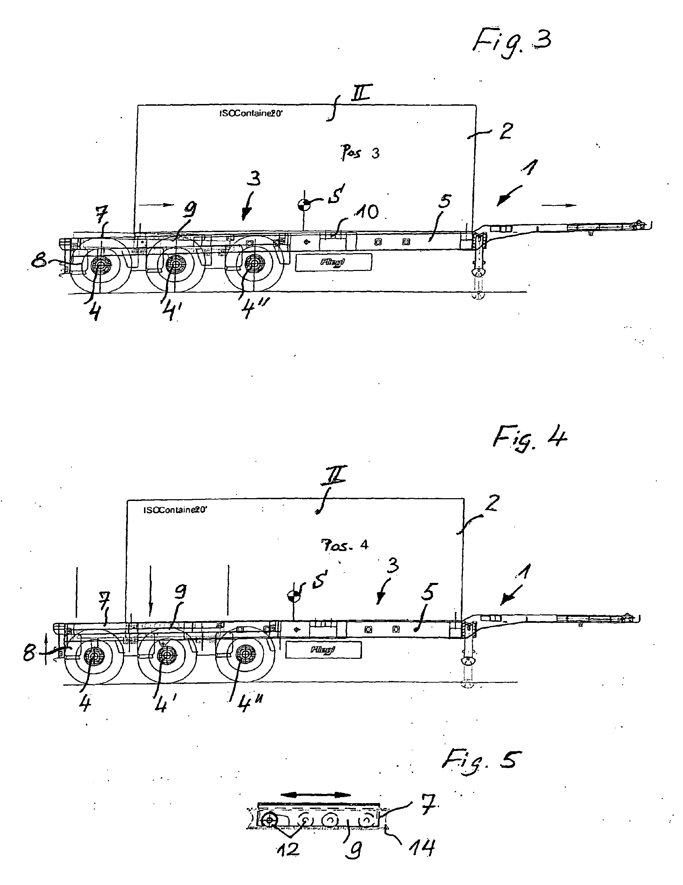

Der auf dem Hilfsrahmen 7 angeordnete Roll- oder Gleitschlitten 9 ist gemäß Fig. 5 in mindestens einer Führung 14 des Hilfsrahmens 7 bewegbar, z. B. über Rollenpaare 11.

Um den Ladeträger 2 von der Heckposition I in die fahrfertige Position Richtung Mitte II zu bewegen, sind folgende Verfahrensschritte durchzuführen:
Zunächst wird nach Fig. 1 der Ladeträger 2 mit dem Heck des Aufliegers 1 bündig geladen, wonach eine hintere Verriegelung gelöst wird.

Gemäß Fig. 2 erfolgt ein Entriegeln einer hinteren Abstützung des Hilfsrahmens 7 auf der Hinterachse; mit Hilfe der Luftfeder 8 wird der Hauptrahmen 5 abgesenkt, wobei sich der im vorderen Bereich um die Gelenkachse 10 drehbar gelagerte Hilfsrahmen 7 mit dem Ladeträger 2 im hinteren Bereich anhebt, und zwar beispielsweise um ca. 120mm.

Nach Fig. 3 wird mit einem mit dem Auflieger 1 verbundenen LKW der Hauptrahmen 5 längenverändert oder verschoben. Der mit dem Vorderteil des Hauptrahmens 5 verriegelte Ladeträger (Container) wird nach vorne gezogen, wobei das Verschieben hinten durch den auf dem Hilfsrahmen 7 gelagerten Roll- oder Gleitschlitten unterstützt wird.

Gemäß Fig. 4 erfolgt ein Anheben des Hauptrahmens mit Hilfe der Luftfeder 8. Gleichzeitig senkt sich der Hilfsrahmen 7 mit dem Ladeträger 2 wieder auf den Hauptrahmen 5 ab, wobei das Absenken des Hilfsrahmens 7 auch mit einer anderen Vorrichtung erfolgen kann. Nunmehr kann die hintere Abstützung des Hilfsrahmens 7 auf die Hinterachse wieder eingeschoben und verriegelt werden. Der Ladeträger kann nun in der neuen fahrfertigen Position Richtung Mitte II an den beiden hinteren Ecken verriegelt werden, so dass die gesamte Einheit fahrfertig ist.

Durch das Zusammenwirken des Roll- oder Gleitschlittens 9, welcher auf dem Hilfsrahmen 7 angeordnet ist, der Luftfeder 8 oder einer anderen Hubeinrichtung, welche den Hilfsrahmen 7 um die Gelenkachse 10 dreht, und dem Hauptrahmen 5, welcher längenveränderbar oder verschiebbar ist, ergibt sich auf einfache Weise eine Verschiebung eines Ladeträgers 2 von der Beladestellung in der Heckposition I in die fahrfertige Position Richtung Mitte II. Damit wird durch die Lastverlagerung der geforderte Satteldruck von mindestens 25% auf der Sattelplatte erreicht.

Zum Entladen lässt sich in umgekehrter Reihenfolge der Ladeträger 2 von der Position gemäß Fig. 4 über die Verfahrensschritte nach Fig. 3 und 2 in die Position 1 überführen, in welcher der Ladeträger 2 in der Heckposition I ist, wonach das Entladen erfolgen kann.

## Patentansprüche

1. Verfahren zum fahrfertigen Beladen eines Aufliegers (1) für austauschbare Ladeträger (2), bei welchem mindestens ein Ladeträger (2) auf einem längenveränderbaren Hauptrahmen (5) angeordnet wird,
wobei der Hauptrahmen (5) mit mindestens einer Fahrachse (4, 4', 4") versehen ist,
**dadurch gekennzeichnet,**
**dass** nach dem Beladen des Aufliegers (1) der Ladeträger (2) angehoben wird, und von einer Heckposition (1) auf dem Hauptrahmen (5) in eine fahrfertige Position Richtung Mitte (II), im Bezug auf den Hauptrahmen verschoben wird.

2. Verfahren nach Anspruch 1, **dadurch gekennzeichnet, dass** der Ladeträger (2) über einen auf dem längenveränderbaren Hauptrahmen (5) gelagerten Hilfsrahmen (7) von der Heckposition (I) in die Position Richtung Mitte (II) verschoben wird.

3. Verfahren nach Anspruch 1 und 2, **gekennzeichnet durch** folgende Verfahrensschritte:
a) Absenken des längenveränderbaren Hauptrahmens (5) mit Hilfe mindestens einer als Hubeinrichtung ausgebildeten Luftfeder (8), wobei der im vorderen Bereich des Hauptrahmens (5) drehbar gelagerte Hilfsrahmen (7) den entriegelten Ladeträger (2) im hinteren Bereich anhebt,
b) Vorschieben oder -ziehen des Ladeträgers (2) auf dem längenveränderbaren Hauptrahmen (5) mit Hilfe des Hilfsrahmens (7) von der Heckposition (I) in die Position Richtung Mitte (II) und
c) Anheben des Hauptrahmens (5) über die mindestens eine Hubeinrichtung (8) mit gleichzeitigem Absenken des Hilfsrahmens (7) in Höhe des Hauptrahmens und Verriegeln des Ladeträgers (2) auf dem Hauptrahmen (5) in der fahrfertigen Position Richtung Mitte (II).

4. Verfahren nach Anspruch 3, **dadurch gekennzeichnet, dass** das Vorschieben oder ziehen des Ladeträgers (2) von der Heckposition (I) in die Position Richtung Mitte (II) über einen auf dem Hilfsrahmen (7) verschiebbar angeordneten Roll- oder Gleitschlitten (9) durchgeführt wird.

5. Verfahren nach einem oder mehreren der vorhergehenden Ansprüche, **dadurch gekennzeichnet, dass** zum Bewegen des Ladeträgers (2) von der Heckposition (I) in die Position Richtung Mitte (II) der Hauptrahmen (5) durch einen mit dem Auflieger (1) verbundenen LKW längenverändert wird.

6. Verfahren nach Anspruch 5, **dadurch gekennzeichnet, dass** das Längenverändern des Hauptrahmens (5) durch dessen Teleskopieren oder Verschieben erfolgt.

7. Vorrichtung zur Durchführung des Verfahrens nach einem oder mehreren der vorhergehenden Ansprüche,
mit einem längenveränderbaren Hauptrahmen (5), auf welchem mindestens ein Ladeträger (2) angeordnet werden kann,
wobei der Hauptrahmen (5) mit mindestens einer Fahrachse (4, 4', 4") versehen ist,
**dadurch gekennzeichnet,**
**dass** auf dem längenveränderbaren Hauptrahmen (5) ein um eine Gelenkachse (10) im vorderen Bereich des Hauptrahmens drehbar gelagerter Hilfsrahmen (7) mit einem Roll- oder Gleitschlitten (9) angeordnet ist.

8. Vorrichtung nach Anspruch 7, **dadurch gekennzeichnet, dass** über mindestens eine im hinteren Bereich des Hauptrahmens angeordnete Hubeinrichtung (8) der Hilfsrahmen (7) gegenüber dem Hauptrahmen (5) um die Gelenkachse (10) schwenkbar ist.

9. Vorrichtung nach Anspruch 8, **dadurch gekennzeichnet, dass** die Hubeinrichtung mindestens eine im hinteren Bereich des Hauptrahmens angeordete Luftfeder (8) ist.

10. Vorrichtung nach Anspruch 9, **dadurch gekennzeichnet, dass** im hinteren Bereich des Hauptrahmens in jedem Eckbereich des Aufliegers (1) eine Luftfeder (8) angeordnet ist.

11. Vorrichtung nach einem oder mehreren der Ansprüche 7 bis 10, **dadurch gekennzeichnet, dass** der Roll- oder Gleitschlitten (9) in mindestens einer Führung (14) des Hilfsrahmens (7) bewegbar ist.

12. Vorrichtung nach einem oder mehreren der Ansprüche 7 bis 11, **dadurch gekennzeichnet, dass** das Längenverändern des Hauptrahmens (5) durch Teleskopieren oder Verschieben des Hauptrahmens (5) durchführbar ist.

## Claims

1. A method for ready-to-run loading of a trailer (1) for interchangeable containers (2), in which at least one container (2) is arranged on a length-adjustable main frame (5), wherein the main frame (5) is provided with at least one drive axle (4, 4', 4"),
**characterised in that**
after loading the trailer (1) the container (2) is lifted and displaced from a rear position (I) on the main frame (5) into a ready-to-run position towards the middle (II) in relation to the main frame.

2. A method according to claim 1, **characterised in that** the container (2) is displaced by way of an auxiliary frame (7) mounted on the length-adjustable main frame (5) from the rear position (I) into the position towards the middle (II).

3. A method according to claims 1 and 2, **characterised by** the following method steps:
a) lowering the length-adjustable main frame (5) by means of at least one pneumatic spring (8) designed as a lifting device, wherein the auxiliary frame (7) rotatably mounted in the front region of the main frame (5) lifts the unlocked container (2) in the rear region,
b) pushing or pulling forward the container (2) on the length-adjustable main frame (5) by means of the auxiliary frame (7) from the rear position (I) into the position towards the middle (II) and
c) lifting the main frame (5) via the at least one lifting device (8) whilst simultaneously lowering the auxiliary frame (7) to the level of the main frame and locking the container (2) on the main frame (5) in the ready-to-run position towards the middle (II).

4. A method according to claim 3, **characterised in that** the pushing or pulling forward of the container (2) from the rear position (I) into the position towards the middle (II) is implemented by way of a rolling carriage or sliding carriage (9) displaceably arranged on the auxiliary frame (7).

5. A method according to one or more of the preceding claims, **characterised in that** for moving the container (2) from the rear position (I) into the position towards the middle (II) the main frame (5) is adjusted in length by a lorry connected to the trailer (1).

6. A method according to claim 5, **characterised in that** the length adjustment of the main frame (5) is effected by telescoping or sliding thereof.

7. A device for carrying out the method according to one or more of the preceding claims, having a length-adjustable main frame (5), on which at least one container (2) can be arranged, wherein the main frame (5) is provided with at least one drive axle (4, 4', 4"), **characterised in that** arranged on the length-adjustable main frame (5) is an auxiliary frame (7) having a rolling carriage or sliding carriage (9) and mounted so as to be rotatable about an axis of articulation (10) in the front region of the main frame.

8. A device according to claim 7, **characterised in that** the auxiliary frame (7) is pivotable about the axis of articulation (10) with respect to the main frame (5) by way of at least one lifting device (8) arranged in the rear region of the main frame.

9. A device according to claim 8, **characterised in that** the lifting device is at least one pneumatic spring (8) arranged in the rear region of the main frame.

10. A device according to claim 9, **characterised in that** a pneumatic spring (8) is arranged in the rear region of the main frame in each corner region of the trailer (1).

11. A device according to one or more of claims 7 to 10, **characterised in that** the rolling carriage or sliding carriage (9) is movable in at least one guide (14) of the auxiliary frame (7).

12. A device according to one or more of claims 7 to 11, **characterised in that** the length adjustment of the main frame (5) can be implemented by telescoping or sliding the main frame (5).

## Revendications

1. Procédé de chargement, prêt au départ, d'une remorque (1), destinée au transport de conteneurs amovibles (2), dans lequel au moins un conteneur (2) est installé sur un châssis porteur (5) de longueur variable, sachant que le châssis porteur (5) est pourvu d' au moins un axe (4, 4' , 4"), **caractérisé en ce que** le conteneur (2), après le chargement de la remorque (1), est soulevé, et déplacé, par rapport au châssis porteur, d'une position (I), située à l'arrière, sur le châssis porteur (5), à une position (II), prête au départ, vers le milieu.

2. Procédé selon la revendication 1, **caractérisé en ce que** le conteneur (2) est déplacé de la position arrière (I) à la position vers le milieu (II), au moyen d'un châssis auxiliaire (7), qui est monté sur le châssis porteur (5)

3. Procédé selon revendication 1 ou 2, **caractérisé par** les étapes suivantes :
a) abaissement du châssis porteur (5) de longueur variable, au moyen d'au moins un coussin d'air (8), qui forme un mécanisme élévateur, sachant que le châssis auxiliaire (7), qui est monté en rotation dans la zone avant du châssis porteur (5), soulève, dans la zone arrière, le conteneur (2) déverrouillé,
b) déplacement par poussée ou par traction en avant du conteneur (2), sur le châssis porteur (5) de longueur variable, à l'aide du châssis auxiliaire (7), de la position arrière (I) à la position vers le milieu (II), et
c) élévation du châssis porteur (5), au moyen d'au moins un mécanisme élévateur (8), avec abaissement simultané du châssis auxiliaire (7) à la hauteur du châssis porteur et verrouillage du conteneur (2) sur le châssis porteur (5), dans la position vers le milieu, prête au départ (II).

4. Procédé selon la revendication 3, **caractérisé en ce que** la poussée ou la traction en avant pour le déplacement du conteneur (2) de la position arrière (I) à la position vers le milieu (II) est exécutée au moyen d'un chariot roulant ou glissant (9), qui est installé, mobile, sur le châssis auxiliaire (7).

5. Procédé selon l'une ou plusieurs des revendications précédentes, **caractérisé en ce que**, pour mouvoir le conteneur (2) de la position arrière (I) à la position vers le milieu (II), la longueur du châssis porteur (5) peut être modifiée par un camion, qui est relié à la remorque (1).

6. Procédé selon la revendication 5, **caractérisé en ce que** la modification de la longueur du châssis porteur (5) est effectuée par télescopage ou par déplacement.

7. Dispositif pour la réalisation du procédé selon l'une ou plusieurs des revendications précédentes, qui est doté d'un châssis porteur (5) de longueur variable, sur lequel au moins un conteneur (2) peut être installé, sachant que le châssis porteur (5) est pourvu d' au moins un axe (4, 4', 4"), **caractérisé en ce que**, sur le châssis porteur (5) à longueur variable, est disposé un châssis auxiliaire (7), qui est monté en rotation autour d'un axe articulé, dans la zone avant du châssis porteur, et est doté d'un chariot roulant ou glissant (9).

8. Dispositif selon la revendication 7, **caractérisé en ce que** le châssis auxiliaire (7) peut être pivoté par rapport au châssis porteur (5), autour de l'axe articulé (10), au moyen d'au moins un mécanisme élévateur (8), qui est disposé dans la zone arrière du châssis porteur.

9. Dispositif selon la revendication 8, **caractérisé en ce que** le mécanisme élévateur est formé par au moins un coussin d'air (8), qui est disposé dans la zone arrière du châssis porteur.

10. Dispositif selon revendication 9, **caractérisé en ce que**, dans la zone arrière du châssis porteur, un coussin d'air (8) est disposé dans chacun des angles de la remorque (1).

11. Dispositif selon l'une ou plusieurs des revendications 7 à 10, **caractérisé en ce que** le chariot de roulement ou de glissement (9) peut être déplacé dans au moins un dispositif de guidage (14) du châssis auxiliaire (7).

12. Dispositif selon l'une ou plusieurs des revendications 7 à 11, **caractérisé en ce que** la modification de la longueur du châssis porteur (5) peut être effectuée par télescopage ou par déplacement du châssis porteur (5).
